# FASCICULE DE BREVET EUROPEEN

(11) **EP 3 649 023 B1**
(45) Date de publication et mention de la délivrance du brevet: **13.09.2023**
(21) Numéro de dépôt: 18752563.9
(22) Date de dépôt: 06.07.2018
(51) Int. Cl.: B60S 1/38, C08L 7/00, C08L 9/00

(54) **LAME D'ESSUIE-GLACE, PROCEDE DE PREPARATION ET DISPOSITIF DE BALAI D'ESSUIE GLACE A BASE DE CAOUTCHOUC NATUREL ET POLYBUTADIENE**
WISCHERBLATT, HERSTELLUNGSVERFAHREN UND WISCHERRAHMENVORRICHTUNG MIT NATURKAUTSCHUK UND POLYBUTADIEN
WIPER BLADE, PRODUCTION METHOD AND WIPER FRAME DEVICE CONTAINING NATURAL RUBBER AND POLYBUTADIENE

(30) Priorité: 06.07.2017 FR 1770722
(43) Date de publication de la demande: 13.05.2020
(73) Titulaire: Compagnie Générale des Etablissements Michelin, 63000 Clermont-Ferrand (FR)
(72) Inventeur: JUILLARD, Bertrand, 63040 CLERMONT-FERRAND Cedex 9 (FR); VOGE, Bozena, 63040 CLERMONT-FERRAND Cedex 9 (FR); MATYAS, Istvan, 63040 CLERMONT-FERRAND Cedex 9 (FR)
(74) Mandataire: Cohen, Sylvia
(86) Numéro de dépôt international: PCT/FR2018/051707
(87) Numéro de publication internationale: WO 2019/008298

(56) Documents cités:
- EP-A2- 0 437 806
- JP-B2- 3 540 475
- US-A- 5 732 436
- US-A1- 2009 253 866

## Description

### DOMAINE DE L'INVENTION

La présente invention concerne une lame d'essuie-glace et notamment une lame d'essuie-glace comprenant une structure de caoutchouc. L'invention concerne en outre un procédé de préparation d'une telle lame, ainsi qu'un dispositif de balai d'essuie-glace.

### ART ANTERIEUR

Les véhicules automobiles sont couramment équipés de systèmes d'essuie-glace. Ces systèmes assurent le lavage du pare-brise et évitent que la vision qu'a le conducteur de son environnement ne soit perturbée. Les essuie-glaces sont classiquement entraînés par des bras ou porte-balais effectuant des mouvements de va-et-vient angulaires et maintenant des balais allongés, porteurs eux-mêmes de lames racleuses réalisées, au moins partiellement, en une matière élastique. Ces lames sont appelées lames d'essuie-glace. Elles frottent contre le pare-brise et évacuent l'eau en l'amenant en dehors du champ de vision du conducteur.

Classiquement, les balais sont réalisés sous la forme de palonniers articulés qui tiennent la lame d'essuie-glace en plusieurs endroits discrets. Dans une version plus récente dénommée "balai plat" ("flat blade" en langue anglaise), les balais forment un ensemble semi-rigide qui maintient la lame racleuse sur toute sa longueur.

Les lames d'essuie-glace selon l'art antérieur sont réalisées en caoutchouc naturel (NR) ou en élastomères synthétiques, tels que le caoutchouc nitrile (NBR), le caoutchouc styrène-butadiène (SBR), le caoutchouc éthylène-propylène-diène (EPDM), le caoutchouc éthylène propylène (EPM), et des mélanges de ces élastomères. Elles présentent généralement une forme triangulaire s'amincissant vers le bas, dont le sommet inférieur se déplace sur le pare-brise, et dont le côté supérieur est rattaché par une bande élastique mince au corps du balai. En se déformant, cette bande mince permet à la lame d'essuie-glace de s'incliner vers le pare-brise, dans un sens, puis dans l'autre, lors des mouvements de va-et-vient du balai.

Les lames d'essuie-glace et, en particulier, le sommet inférieur de la forme triangulaire de ces lames en contact avec le pare-brise, sont soumises à des frottements répétés. Ces frottements sont à l'origine d'une abrasion des lames, qui conduit à un vieillissement de celles-ci. Aussi, à compter d'un certain nombre de cycles, les lames doivent être changées.

En outre, les lames d'essuie-glace de caoutchoucs naturels comme synthétiques sont susceptibles de se détériorer plus ou moins rapidement après une exposition prolongée à l'atmosphère en raison de mécanismes connus d'oxydation et d'ozonolyse.

Il existe donc un besoin pour améliorer et/ou compléter les compositions déjà connues pour obtenir des lames d'essuie-glace présentant des propriétés améliorées de résistance à l'abrasion, une bonne déformation rémanente à la compression, une bonne tenue à la fatigue et une bonne résistance à l'ozone et à l'oxydation.

### RESUME DE L'INVENTION

Compte tenu de ce qui précède, un problème que se propose de résoudre l'invention est de développer une nouvelle lame d'essuie-glace comprenant une structure de caoutchouc, qui présente une bonne résistance à l'abrasion, à la fatigue et, avantageusement, aux rayonnements ultraviolets et vieillissement à l'ozone.

La solution selon l'invention à ce problème posé a pour premier objet une lame d'essuie-glace comprenant une structure de caoutchouc, caractérisée en ce que ladite structure est formée d'une matrice élastomérique comprenant :
de 25 à 60 pce, parties en poids pour cent parties en poids d'élastomère, de caoutchouc naturel ; et
de 40 à 75 pce de polybutadiene,et que ladite structure comprend en outre de 4 à 20 pce d'une huile ainsi qu'au moins 4 pce d'un mélange d'agents de protection, ledit mélange d'agents de protection comprenant de 1 à 3 pce d'au moins un agent antiozonant et de 1 à 6 pce d'au moins un agent antioxydant.

L'invention a pour second objet un procédé de préparation d'une lame d'essuie-glace comprenant les étapes suivantes :
on mélange la composition selon l'une des revendications 1 à 6 ;
on moule ladite composition dans un moule à lame d'essuie-glace ; et
on réticule la composition dans le moule à lame d'essuie - glace.

L'invention a pour troisième objet un dispositif de balai d'essuie-glace pour véhicule automobile, comportant une lame d'essuie-glace telle que définie dans la présente invention.

De manière avantageuse,
- la structure de caoutchouc comprend de 1 à 6 pce d'au moins un agent antioxydant; l'agent antioxydant est choisi parmi le N-(1,3-dimethylbutyl)-N'-phenyl-1,4-phenylenediamine, le polymère 2,2,4-trimethyl-1,2-dihydroquinoline, 2,2'-methylenebis(6-*tert*-butyl-4-methylphenol), *N,N*'-Diphenyl-*p-*phenylenediamine, 2,6-Di*tert*-butyl-4-methylphenol, N-isopropyl-N'-phenyl-1,4- phenylenediamine, 3,9-Di-3-cyclohexen-1-yl-2,4,6,10-tetraoxaspiro[5.5]undecane, Bis(1-octyloxy-2,2,6,6-tetramethyl-4-piperidyl) sebacate, octyl 3-[3-(2Hbenzotriazol-2-yl)-5-tert-butyl-4-hydroxyphenyl]propanoate, méthyl-2-mercaptobenzimidazole et leur mélange; - la lame d'essuie-glace comprend de 1 à 3 pce d'au moins un agent anti-ozonant; l'agent antiozonant est choisi parmi les cires ozone, le polymère 2,2,4-trimethyl-1,2-dihydroquinoline, les paraphénylènes diamine et leur mélange;
- la structure de caoutchouc comprend en outre au moins 40 pce d'une charge particulaire de renforcement;
- au moins 0,5 pce d'au moins un activateur de la vulcanisation ; et
- au moins 0,6 pce d'au moins un accélérateur ou ultra-accélérateur de la vulcanisation ;
- la charge particulaire de renforcement est choisie parmi le noir de carbone ou la silice ;
- Si la charge particulaire de renforcement est la silice alors un agent de liaison élastomère-silice sera ajouté. Cet agent de liaison sera le Tri Ethoxy-Silyl-Propyl-Tétrasulfure.

Au moins 2,4pce de ce silane seront alors ajouté. D'autres types de silane comme le Si75 ou le NXT peuvent être utilisés.
- l'activateur de la vulcanisation est choisi parmi l'acide stéarique, l'oxyde de zinc, et leurs mélanges ;
- l'accélérateur et/ou ultra-accélérateur de la vulcanisation sont choisis parmi le soufre, le sulfénamide, le benzothiazyle sulfénamide, le TBzTD et leurs mélanges.

### BREVE DESCRIPTION DE LA FIGURE

L'invention sera mieux comprise à la lecture de la description non limitative qui suit, rédigée au regard de la figure unique 1 qui montre une lame d'essuie-glace comprenant une structure en caoutchouc.

### DESCRIPTION DETAILLEE DE L'INVENTION

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression "partie en poids pour cent parties en poids d'élastomère" (ou pce), il faut entendre au sens de la présente invention, la partie, en masse pour cent parties en masse d'élastomère.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

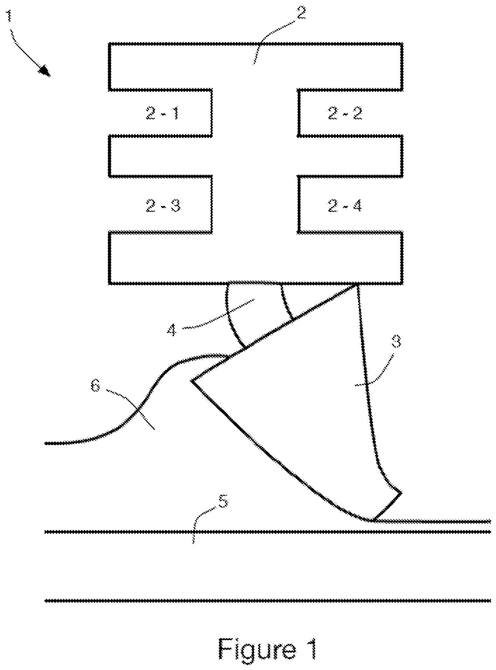

L'invention concerne une lame d'essuie-glace. Ainsi comme cela est montré à la figure 1, une telle lame 1 présente une embase 2 et un frotteur 3 articulé sur l'embase 2 par une charnière 4.

L'embase 2 est attachée au corps du balai non représenté à la figure 1. Elle présente deux paires de cavités longitudinales 2-1, 2-2, 2-3, 2-4. Ces cavités longitudinales sont disposées de part et d'autre de l'embase 2. La première 2-1, 2-2 des deux paires de cavités, disposée à un niveau supérieur, sert à la réception d'un élément de raidissement consistant, soit en deux lames métalliques longitudinalement disposées de part et d'autre de l'embase 2, soit en une baguette qui recouvre la partie supérieure de l'embase 2 en ayant ses bords libres coopérant avec la paire de cavités 2-1, 2-2 précitée. La seconde 2-3, 2-4 des paires de cavités, disposée à un niveau inférieur à celui de la paire de cavités susmentionnée, sert à la réception des griffes de maintien que présente habituellement la monture du balai pour porter la lame 1 d'essuie-glace. Le frotteur 3 présente généralement une forme triangulaire s'amincissant vers le bas dont le sommet inférieur se déplace sur le pare-brise d'un véhicule automobile et dont le côté supérieur est rattaché à l'embase 2 par la charnière 4 formée d'une bande élastique mince. La charnière 4 permet, en se déformant, à la lame 1 d'essuie-glace de s'incliner vers le pare-brise, dans un sens puis dans l'autre, lors des mouvements de va-et vient du balai. Le frotteur 3 chasse l'eau 6 du pare-brise 5 selon le sens de ces mouvements de va-et-vient.

La lame 1 d'essuie-glace comprend une structure de caoutchouc. Cette structure de caoutchouc constitue le frotteur 3, ou l'extrémité terminale de ce frotteur 3 en contact avec le pare-brise 5. Elle constitue en outre avantageusement la charnière 4 et, éventuellement, l'embase 2 soit, dans un mode de réalisation selon l'invention, l'entièreté de la lame 1.

La structure en caoutchouc de la lame d'essuie-glace selon l'invention comporte une matrice élastomérique. Cette matrice élastomérique est insaturée. Elle ne comporte pas d'halogène.

Cette matrice élastomérique comprend de 25 à 60 pce et, préférentiellement, de 30 à 55 pce, de caoutchouc naturel (NR). Par exemple, la matrice comprend approximativement 35 pce de caoutchouc naturel. Dans un autre exemple, la matrice comprend approximativement 50 pce de caoutchouc naturel. Le caoutchouc naturel est un élastomère largement utilisé dans le domaine des pneumatiques en raison de ses propriétés remarquables, comme par exemple une bonne résilience, une bonne résistance à la traction, au déchirement et à la fatigue. Il est également utilisé comme matériau de lame d'essuie-glace. Dans ce contexte, le caoutchouc naturel vulcanisé présente de bonnes performances d'essuyage ainsi qu'une bonne endurance.

La matrice élastomérique selon l'invention comprend également de 40 à 75 pce et, préférentiellement, de 40 à 70 pce, de polybutadiène (BR). Par exemple, la matrice comprend approximativement 65 pce de polybutadiène. Dans un autre exemple, la matrice comprend approximativement 50 pce de polybutadiène. Le polybutadiène résulte de la polymérisation du buta-1,3-diène, appelé butadiène, de formule semi-développée H2C=CH-CH=CH2. La polymérisation en chaîne du butadiène peut se faire par différentes méthodes. Elle conduit à trois différentes microstructures polyinsaturées : les unités 1,4-cis, 1,4-trans et 1,2. Le polybutadiène est connu pour présenter une très bonne résistance à l'abrasion. Ces qualités sont conservées à basse température. Le polybutadiène est en outre glissant sur un support mouillé. Chaque motif de répétition du polybutadiène porte une double liaison résiduelle réactive. La vulcanisation le rend insoluble. Dans le contexte de la présente invention, l'utilisation de polybutadiène confère à la matrice élastomérique des propriétés largement améliorées en résistance à l'abrasion, une meilleure tenue de la lame d'essuie-glace dans le temps, notamment lorsque la lame d'essuie-glace est soumise à d'importantes variations de température, et une meilleure endurance.

La matrice selon l'invention est donc une matrice NR-BR, c'est-à-dire que 100 pce de ladite matrice est formée soit de caoutchouc naturel NR, soit de polybutadiène.

Selon l'invention, la structure de caoutchouc de la lame d'essuie-glace comprend en outre un ou une pluralité d'agents de protection. Par « agents de protection », il faut comprendre des composés qui confèrent une résistance à la dégradation liée aux rayonnements UV et/ou à l'ozone. Dans un mode de réalisation selon l'invention, la structure de caoutchouc comprend un mélange d'agents de protection comprenant au moins un agent antioxydant et au moins un agent anti-ozonant.

Avantageusement, l'agent antioxydant est choisi parmi le N-(1,3-dimethylbutyl)-N'-phényl-1,4-phénylènediamine (6PPD), le polymère 2,2,4-triméthyl-1,2-dihydroquinoline (TMQ), le 2,2'-methylenebis(6-*tert*-butyl-4-methylphenol), le *N,N*'-Diphenyl-*p*-phenylenediamine, le 2,6-Di-*tert*butyl-4-methylphenol, N-isopropyl-N'-phenyl-1,4-phenylenediamine, le 3,9-Di-3-cyclohexen-1-yl-2,4,6,10-tetraoxaspiro[5.5]undecane, le Bis(1-octyloxy-2,2,6,6-tetramethyl-4-piperidyl) sebacate, l'octyl 3-[3-(2Hbenzotriazol-2-yl)-5-tert-butyl-4-hydroxyphenyl]propanoate, méthyl-2-mercaptobenzimidazole et leur mélange. Avantageusement, l'agent anti-ozonant est choisie parmi les cires anti-ozone, le polymère 2,2,4-trimethyl-1,2-dihydroquinoline et les paraphénylènes diamine. Plus particulièrement, la cire antiozone est du type "C32ST" ou "C36ST".

Selon l'invention, la structure de caoutchouc comprend au moins 4 pce et, préférentiellement au moins 5 pce, d'agents de protection. Le taux d'agents de protection est donc considérablement augmenté par rapport aux taux de tels agents contenus dans des compositions utilisées notamment dans les essuie-glaces. Plus particulièrement, la structure de caoutchouc comprend de 1 à 6 pce d'au moins un agent antioxydant, et de 1 à 3 pce d'au moins un agent anti-ozonant. Par ailleurs, selon l'invention, la structure de caoutchouc comprend en outre au moins 40 pce et, préférentiellement, au moins 50 pce, d'une charge particulaire de renforcement. Par exemple, la structure de caoutchouc comprend approximativement 55 pce d'une charge particulaire de renforcement. Dans un exemple, cette charge particulaire de renforcement est le noir de carbone.

La structure de caoutchouc selon l'invention comprend de 4 à 20 pce d'une huile. Dans un exemple, cette structure comprend approximativement 5 pce d'une huile. Dans un autre exemple, la structure comprend environ 19 pce d'une huile. La présence d'huile dégrade la résistance de la structure à l'oxydation et/ou à l'ozone, mais permet de régler la viscosité dans la fabrication de cette structure.

La structure de caoutchouc comprend par ailleurs au moins 0,5pce et, préférentiellement au moins 1pce, d'au moins un activateur de la vulcanisation. Avantageusement, l'activateur de la vulcanisation est choisi parmi l'acide stéarique, l'oxyde de zinc, et leurs mélanges.

Enfin, la structure de caoutchouc selon l'invention comprend avantageusement au moins 1 pce de soufre et au moins 0,6 pce d'au moins un accélérateur et/ou ultra-accélérateur de la vulcanisation, lesdits accélérateur ou ultra-accélérateurs de vulcanisation étant choisis parmi le sulfénamide, le benzothiazyle sulfénamide, le TBzTD, le TMTD et leurs mélanges.

L'invention concerne également un procédé de préparation d'une lame d'essuie-glace comprenant les étapes suivantes :
on mélange la composition élastomérique telle que décrite ci-dessus sans les agents vulcanisant et accélérateurs et/ou ultra-accélérateurs;
on filtre le masterbatch dans une machine de filtration avec un filtre de mesh 80 ;
on ajoute les agents vulcanisant ainsi que les accélérateurs ;
on moule ladite composition dans un moule à lame d'essuie-glace ; et
on réticule la composition dans le moule à lame d'essuie - glace.

Plus particulièrement, la préparation de la composition élastomérique est réalisée selon le procédé de mélangeage dit "Up-Side-Down" (USD, dessus-dessous). Ce procédé consiste tout d'abord à incorporer la gomme, les charges et les agents de protection. Le mélange sous agitation des différents composants est réalisé sur une durée entre 3 et 7 minutes. La tombée du mélange se fait à une température entre 150 et 170°C.

La composition comprenant la gomme, les charges et les agents de protection est ensuite refroidie sur un outil à cylindres à une température comprise entre 30 et 60°C. Cette composition est ensuite filtrée dans une filtreuse avec une taille de filtre de mesh 80. Le système de vulcanisation y est ensuite incorporé à une température comprise entre 70°C et 110°C. Le travail mécanique du mélange est réalisé pendant une durée comprise entre 3 et 7 min. Finalement, la cuisson pour le moulage des lames d'essuie-glace est réalisée à une température comprise entre 160 et 170°C.

L'invention concerne finalement un dispositif de balai d'essuie-glace pour véhicule automobile, caractérisé en ce qu'il comporte une lame d'essuie-glace telle que définie ci-dessus.

### EXEMPLE DE REALISATION DE L'INVENTION

L'exemple qui suit permet d'illustrer l'invention, cette dernière ne saurait cependant être limitée à ce seul exemple.

Cet essai a pour objet de montrer l'amélioration de performance en terme de propriétés de caoutchouterie de plusieurs compositions selon l'invention par rapport à une composition témoin classique pour lame d'essuie-glace.

L'ensemble des compositions ont été préparées conformément au procédé détaillé précédemment. Ces compositions sont définies de la façon suivante :
- la composition témoin T1 est une composition pour lame d'essuie-glace « classique » incluant notamment du caoutchouc naturel, du noir de carbone et des agents de protection,
- la composition C1 conforme à la présente invention inclut un coupage de caoutchouc naturel et de polybutadiène, un taux de noir de carbone plus faible que T1 et un taux d'agents de protection supérieur à celui de la composition T1,
- la composition C2 conforme à la présente invention est identique à la composition C1 à l'exception du coupage élastomérique de la composition,
- la composition C3 conforme à la présente invention inclut un coupage de caoutchouc naturel et de polybutadiène différent de celui de la composition C1, un taux de noir de carbone et d'agents de protection identiques à ceux de la composition C1, et un taux d'agent plastifiant et du système de réticulation adapté à la différence de fluidité du polybutadiène utilisé.

Les taux des différents constituants des compositions exprimés en pce, partie en poids pour cent parties en poids d'élastomère, sont présentés dans le tableau 1 qui suit :

**Tableau 1**

| Compositions | T1 | C1 | C2 | C3 |
|---|---|---|---|---|
| NR | 100 | 50 | 35 | 50 |
| BR (1) | | 50 | 65 | 50 |
| BR (2) | | | | |
| NOIR DE CARBONE (3) | 75 | 50 | 50 | 50 |
| HUILE PLASTIFIANTE | 5 | 5 | 5 | 19 |
| 6PPD | 1,5 | 3,3 | 3,3 | 3,3 |
| TMQ | 1,5 | 1,5 | 1,5 | 1,5 |
| CIRE | 1 | 1,5 | 1,5 | 1,5 |
| ACIDE STEARIQUE | 1 | 1 | 1 | 1 |
| ZNO | 3 | 3 | 3 | 2,4 |
| BLOC SOUFRE SOLUBLE | 1, 9 | 1,9 | 1, 9 | 0,55 |
| TBBS 70% | 0,95 | 0, 95 | 0,95 | 0,95 |

| | | | | |
|---|---|---|---|---|
| (1) Polybutadiène Néodyme 98% de 1,4-Cis, Tg = -108°C, Mooney élastomère = 44, (2) Polybutadiène Néodyme 98.4% de cis, 1% de trans, 0.6% de BD1.2, Tg -109°C, Mooney élastomère =63, (3) Noir de carbone N347 commercialisé par la société Cabot Corporation. | | | | |

De manière classique, les tests de déchirabilité et de fatigue ont été effectués sur ces mélanges. Les tests de déchirabilité ont été réalisés à 23°C en utilisant des éprouvettes dites "DZ" (cf. schéma ci-dessous).

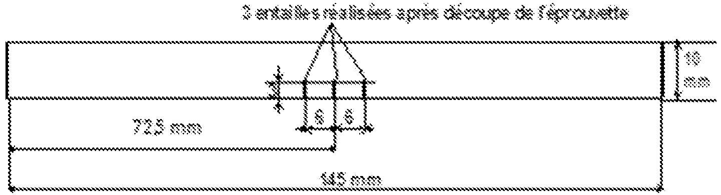

Ces éprouvettes ont été placées dans des mors d'une machine type INSTRON et ont été étirées à 500 mm/min jusqu'à rupture pour déterminer le déplacement traverse à la rupture et la résistance au déchirement.

Par ailleurs, des tests de résistance à la fatigue ont été effectués sur la structure de caoutchouc du présent exemple. Ces tests ont pour but de mesurer la durée de vie d'une éprouvette soumise à des tractions répétées sur machine dite de type M.F.T.R. (Machine de Fatigue par Tractions Répétées)..

En outre, des tests de résistance à l'abrasion ont été réalisés. Dans ces tests, il a été mesuré l'érosion de la structure de caoutchouc du présent exemple en faisant glisser un patin de gomme sur un cylindre recouvert de papier abrasif. La valeur obtenue de résistance à l'abrasion correspond à la perte de volume.

De plus, des tests de résistance au vieillissement ozone et UV ont été réalisés. On observe à l'oeil nu l'état de surface des éprouvettes après vieillissement à une température de 38°C et une concentration en ozone de 50pphm.

Enfin, des tests de déformation à la compression (« Compression Set ») ont été réalisés conformément à la norme ASTM D935B.

L'ensemble des mesures réalisées pour les compositions T1, C1, C2 et C3 sont reportés dans le tableau 2 qui suit.

**Tableau 2**

| Compositions | T1 | C1 | C2 | C3 |
|---|---|---|---|---|
| Abrasion (perte de volume en mm3) | 191 | 45 | 34 | 47 |
| Déchirabilité déformation % | 147 | 370 | 537 | 388 |
| Déchirabilité force (N/mm)) | 77 | 67 | 69 | 65 |
| Fatigue (nombre de Kcycle avant rupture) | 26 | 270 | 458 | 261 |
| Résistance Ozone | Rupture à 6 jours | Pas de craquelure | Pas de craquelure | Pas de craquelure |
| Résistance UV | Craquelures apparentes | Pas de craquelure | Pas de craquelure | Pas de craquelure |
| Compression set % | 23,8 | 13,8 | 22,7 | 12,3 |

Les résultats des tests du tableau 2 montrent de façon surprenante que toutes les compositions conformes à l'invention (C1, C2, (3) avec des taux de coupage différents ou avec des polybutadiènes différents, ont une résistance de cette structure à l'abrasion très nettement améliorées par rapport à la composition témoin T1 (pertes en volume beaucoup plus faibles), et que c'est également le cas pour les propriétés de résistance à la fatigue (nombre de Kcycles beaucoup plus important).

Les compositions C1 à C3 conformes à l'invention présentent également toutes une déchirabilité en déformation très améliorée par rapport à la composition témoin T1 sans dégradation de la déchirabilité en Force.

De même on constate que les compositions conformes à l'invention présentent des propriétés de résistance aux vieillissements ozone et UV très significativement améliorées par rapport à la composition témoin.

Finalement, toutes les formulations selon l'invention présentent de façon étonnante d'excellentes propriétés de résistance à l'abrasion, de fatigue ainsi que de très bonnes propriétés de déchirabilité et de vieillissements ozone et UV, qui sont, de plus, nettement améliorées par rapport à celles connues de l'art antérieur, tout en maintenant une déformation rémanente à la compression identique à la composition témoin voire améliorées pour les compositions C1 et C2.

## Revendications

1. Lame d'essuie-glace comprenant une structure de caoutchouc, **caractérisée en ce que** ladite structure est formée d'une matrice élastomérique comprenant :
de 25 à 60 parties en poids pour cent parties en poids d'élastomère, pce, de caoutchouc naturel ; et
de 40 à 75 pce de polybutadiène,
et que ladite structure comprend en outre de 4 à 20 pce d'une huile ainsi qu'au moins 4 pce d'un mélange d'agents de protection, ledit mélange d'agents de protection comprenant de 1 à 3 pce d'au moins un agent antiozonant et de 1 à 6 pce d'au moins un agent antioxydant.

2. Lame d'essuie-glace selon la revendication 1, **caractérisée en ce que** la matrice élastomérique comprend :
de 30 à 55 pce de caoutchouc naturel ; et
de 40 à 70 pce de polybutadiène.

3. Lame d'essuie-glace selon l'une des revendications 1 ou 2, **caractérisée en ce que** l'agent antioxydant est choisi parmi le N-(1,3-dimethylbutyl)-N'- phenyl-1,4-phenylenediamine, le polymère 2,2,4-trimethyl-1,2-dihydroquinoline, 2,2'-methylenebis(6-*tert*-butyl-4-methylphenol), *N,N'*-Diphenyl-*p-*phenylenediamine, 2,6-Di*tert*-butyl-4-methylphenol, N-isopropyl-N'-phenyl-1,4-phenylenediamine, , 3,9-Di-3-cyclohexen-1-yl-2,4,6,10-tetraoxaspiro[5.5]undecane, Bis(1-octyloxy-2,2,6,6-tetramethyl-4-piperidyl) sebacate, octyl 3-[3-(2Hbenzotriazol-2-yl)-5-tert-butyl-4-hydroxyphenyl]propanoate, méthyl-2-mercaptobenzimidazole et leur mélange.

4. Lame d'essuie-glace selon l'une des revendications 1 à 3, **caractérisée en ce que** l'agent anti-ozonant est choisi parmi la cire ozone, le polymère 2,2,4-trimethyl-1,2-dihydroquinoline, les paraphénylènes diamine et leur mélange.

5. Lame d'essuie-glace selon l'une des revendications précédentes, **caractérisée en ce que** la structure de caoutchouc comprend en outre au moins 40 pce d'une charge particulaire de renforcement;
- au moins 0,5 pce d'au moins un activateur de la vulcanisation; et
- au moins 0,6 pce d'au moins un accélérateur de la vulcanisation.

6. Lame d'essuie-glace selon la revendication 5, **caractérisée en ce que** la charge particulaire de renforcement est le noir de carbone ;
- l'activateur de la vulcanisation est choisi parmi l'acide stéarique, l'oxyde de zinc, et leurs mélanges ;
- l'accélérateur de la vulcanisation est choisi parmi le soufre, le sulfénamide, le benzothiazyle sulfénamide, et leurs mélanges.

7. Procédé de préparation d'une lame d'essuie-glace comprenant les étapes suivantes selon lesquelles :
on mélange la composition élastomèrique selon l'une des revendications 1 à 6 ; puis
on filtre le masterbatch dans une machine de filtration avec un filtre de mesh 80 ;
on ajoute les agents vulcanisant ainsi que les accélérateurs ;
on moule ladite composition dans un moule à lame d'essuie-glace ; puis
on réticule la composition dans le moule à lame d'essuie - glace.

8. Dispositif de balai d'essuie-glace pour véhicule automobile, **caractérisé en ce qu'**il comporte une lame d'essuie-glace selon l'une des revendications 1 à 6.

## Patentansprüche

1. Scheibenwischblatt, das eine Kautschukstruktur umfasst, **dadurch gekennzeichnet, dass** diese Struktur aus einer Elastomermatrix gebildet ist, welche Folgendes umfasst:
25 bis 60 Gewichtsteile auf hundert Elastomergewichtsteile, phr, an Naturkautschuk; und
40 bis 75 phr an Polybutadien,
und dass die Struktur darüber hinaus 4 bis 20 phr an einem Öl sowie mindestens 4 phr an einer Schutzmittelmischung umfasst, wobei die Schutzmittelmischung 1 bis 3 phr an mindestens einem Ozonschutzmittel und 1 bis 6 phr an mindestens einem Antioxidationsmittel umfasst.

2. Scheibenwischblatt nach Anspruch 1, **dadurch gekennzeichnet, dass** die Elastomermatrix Folgendes umfasst:
30 bis 55 phr an Naturkautschuk; und
40 bis 70 phr an Polybutadien.

3. Scheibenwischblatt nach einem der Ansprüche 1 oder 2, **dadurch gekennzeichnet, dass** das Antioxidationsmittel aus N-(1,3-Dimethylbutyl)-N'-phenyl-1,4-phenylendiamin, dem Polymer 2,2,4-Trimethyl-1,2-dihydrochinolin, 2,2'-Methylen-bis-(6-*tert*.-butyl-4-methylphenol), *N,N'-*Diphenyl-p-phenylendiamin, 2,6-Di-*tert*.-butyl-4-methylphenol, N-Isopropyl-N'-phenyl-1,4-phenylendiamin, 3,9-Di-3-cyclohexen-1-yl-2,4,6,10-tetraoxaspiro[5.5]undecan, bis-(1-Octyloxy-2,2,6,6-tetramethyl-4-piperidyl)sebacat, Octyl-3-[3-(2H-benzotriazol-2-yl)-5-tert.-butyl-4-hydroxyphenyl]propanoat, Methyl-2-mercaptobenzimidazol und deren Mischung ausgewählt ist.

4. Scheibenwischblatt nach einem der Ansprüche 1 bis 3, **dadurch gekennzeichnet, dass** das Ozonschutzmittel aus Ozonschutzwachs, dem Polymer 2,2,4-Trimethyl-1,2-dihydrochinolin, den Paraphenylendiaminen und deren Mischung ausgewählt ist.

5. Scheibenwischblatt nach einem der vorhergehenden Ansprüche, **dadurch gekennzeichnet, dass** die Kautschukstruktur darüber hinaus mindestens 40 phr eines verstärkenden partikelförmigen Füllstoffs;
- mindestens 0,5 phr mindestens eines Vulkanisationsaktivators; und
- mindestens 0,6 phr mindestens eines Vulkanisationsbeschleunigers umfasst.

6. Scheibenwischblatt nach Anspruch 5, **dadurch gekennzeichnet, dass** es sich bei dem verstärkenden partikelförmigen Füllstoff um Ruß handelt;
- der Vulkanisationsaktivator aus Stearinsäure, Zinkoxid und deren Mischungen ausgewählt ist;
- der Vulkanisationsbeschleuniger aus Schwefel, Sulfenamid, Benzothiazylsulfenamid und deren Mischung ausgewählt ist.

7. Verfahren zur Herstellung eines Scheibenwischblatts, das die folgenden Schritte umfasst, gemäß welchen:
die Elastomerzusammensetzung nach einem der Ansprüche 1 bis 6 angemischt wird; und anschließend
das Masterbatch in einem Filtrationsgerät mittels eines 80-mesh-Filters filtriert wird;
die vulkanisierenden Mittel sowie die Beschleuniger zugesetzt werden;
die Zusammensetzung in einer Scheibenwischblattform geformt wird; und anschließend
die Zusammensetzung in der Scheibenwischblattform vernetzt wird.

8. Scheibenwischerarmvorrichtung für Kraftfahrzeuge, **dadurch gekennzeichnet, dass** sie ein Scheibenwischblatt nach einem der Ansprüche 1 bis 6 aufweist.

## Claims

1. Wiper blade comprising a rubber structure, **characterized in that** said structure is formed from an elastomer matrix comprising:
from 25 to 60 parts by weight per hundred parts by weight of elastomer, phr, of natural rubber; and
from 40 to 75 phr of polybutadiene
and that said structure further comprises 4 to 20 phr of an oil and at least 4 phr of a mixture of protective agents, said mixture of protective agents comprising from 1 to 3 phr of at least one antiozonizing agent and from 1 to 6 phr of at least one antioxidant.

2. Wiper blade according to Claim 1, **characterized in that** the elastomer matrix comprises:
from 30 to 55 phr of natural rubber; and
from 40 to 70 phr of polybutadiene.

3. Wiper blade according to either of Claims 1 or 2, **characterized in that** the antioxidant is selected from N-(1,3-dimethylbutyl)-N'- phenyl-1,4-phenylenediamine, the polymer 2,2,4-trimethyl-1,2-dihydroquinoline, 2,2'-methylenebis(6-*tert*-butyl-4-methylphenol), *N,N'*-diphenyl-*p*-phenylenediamine, 2,6-di*tert*-butyl-4-methylphenol, N-isopropyl-N'-phenyl-1,4-phenylenediamine, 3,9-di-3-cyclohexen-1-yl-2,4,6,10-tetraoxaspiro[5.5]undecane, bis(1-octyloxy-2,2,6,6-tetramethyl-4-piperidyl)sebacate, octyl 3-[3-(2H-benzotriazol-2-yl)-5-tert-butyl-4- hydroxyphenyl]propionate, methyl-2-mercaptobenzimidazole and mixtures thereof.

4. Wiper blade according to one of Claims 1 to 3, **characterized in that** the antiozonizing agent is selected from ozone wax, the polymer 2,2,4-trimethyl-1,2-dihydroquinoline, paraphenylenediamines and mixtures thereof.

5. Wiper blade according to one of the preceding claims, **characterized in that** the rubber structure further comprises at least 40 phr of a particulate reinforcing filler;
- at least 0.5 phr of at least one vulcanization activator; and
- at least 0.6 phr of at least one vulcanization accelerator.

6. Wiper blade according to Claim 5, **characterized in that** the particulate reinforcing filler is carbon black;
- the vulcanization activator is selected from stearic acid, zinc oxide, and mixtures thereof;
- the vulcanization accelerator is selected from sulfur, sulfenamide, benzothiazyl sulfenamide, and mixtures thereof.

7. Method for producing a wiper blade comprising the following steps:
mixing the elastomer composition according to one of Claims 1 to 6; then
filtering the masterbatch in a filtration machine with a filter of mesh 80;
adding the vulcanizing agents as well as the accelerators;
moulding said composition in a wiper blade mould; and then crosslinking the composition in the wiper blade mould.

8. Wiper frame device for motor vehicles, **characterized in that** it comprises a wiper blade according to one of Claims 1 to 6.
